# EUROPEAN PATENT SPECIFICATION

(11) **EP 0 593 399 B1**
(45) Date of publication and mention of the grant of the patent: **31.07.1996**
(21) Application number: 93830232.0
(22) Date of filing: 27.05.1993
(51) Int. Cl.: H02B 1/21

(54) **An adapter with a safety grip device for connecting rail mounted electric apparatus on electric power supply busbars**
Adapter mit einer Sicherungsgreifvorrichtung zum Verbinden eines elektrischen Geräts auf eine Energieversorgungssammelschiene
Adaptateur avec un dispositif à griffe de sécurité pour connecter un appareil électrique à des barres d'alimentation omnibus

(30) Priority: 16.10.1992 IT MI922384
(43) Date of publication of application: 20.04.1994
(73) Proprietor: BTICINO S.P.A., I-20122 Milano (IT)
(72) Inventor: Fabrizi, Fabrizio, I-24100 Bergamo (IT); Boffelli, Roberto, I-24030 Mozzo (Bergamo) (IT)
(74) Representative: Falcetti, Carlo

(56) References cited:
- EP-A- 0 170 161
- DE-U- 8 903 582
- DE-U- 9 011 657

## Description

This invention relates to an adapter incorporating a safety grip device and useful for connecting rail-mounted apparatus to electric power supply busbars.

As is well known, industrial electric systems employ parallel power supply busbars to which electrical appliances are connected, usually with the interposition of switches, circuit breakers, and other protection apparatuses of standard modular type.

Most of these apparatuses are designed for mounting to a holding rail in interfitting relationship therewith and side-by-side into sets which are put together to fill different consumer's demands.

Also known are adapters which provide holding rails for such apparatuses and, in turn, fit directly onto the busbars to receive support therefrom, the adapters containing at least one electric connection element for connecting the apparatus to at least one of the busbars.

That prior adapter is actually just hooked onto the busbars by means of a plurality of comb-like disposed hooks, one for each busbar, so that the mechanical tie is an insecure one.

A yielding tab made of a plastics material and located proximate to one of the hooks should expectedly close one of the hooks to some extent in order to prevent disengagement of the adapter from the bars and its removal if the adapter is correctly installed.

In actual practice, since the tab is located in an area hidden from the installer's view, that mount may easily turn out to be precarious, and even when properly installed, the tab resiliency is no adequate answer to the problem of making the adapter unremovable under shock and anomalous stresses applied to the mounted apparatus.

A further drawback of adapters of that kind is that their holding hooks require that a definite spacing be maintained between the busbars.

The busbars are subjected, in the presence of short currents or large load currents, to attractive and repulsive forces which may alter their spacing and bring a change in the condition of the electric contact between the bars and the adapter due to contact surface creeping, decreased contact area, and accordingly cause unacceptable large currents and local overheating which may eventually result in arcing, local melting of conductors, and local charring of the adapter insulating case with consequent loss of its insulative properties.

It is the object of this invention to obviate all of the drawbacks described by providing an adapter which incorporates a safety grip device ensuring positive and easily ascertained retention of the adapter on the busbars, only enables the electric apparatus to become connected to the busbar through the adapter when the adapter fits correctly on the bars, and ties the busbars together at fixed relative positions, thereby preventing electrodynamic forces applied to the bars from altering their spacing.

These results are obtained through a safety grip device mounted slidably inside, or in a preferred embodiment on one side of, the adapter, and consisting of a comb-like arrangement of plural dent-like teeth, each tooth being intended for closing one of the adapter mounting hooks, the comb-like arrangement being provided with a front lug or pushbutton to inhibit the electric apparatus from forming a locked fit to the adapter when the latter is not properly hooked onto the busbars.

The features and advantages of the invention will become apparent from the following description of a preferred embodiment thereof and the accompanying drawings, in which:
Figure 1 is an exploded perspective view of an adapter incorporating the safety grip device of this invention;
Figures 2, 3, 4 and 5 are side views schematically illustrating the sequential steps of the procedure for hooking the adapter of Figure 1 onto electric power supply busbars; and
Figure 6 is a perspective view of the adapter in Figure 1, shown associated with an electric apparatus to only enable it to be connected electrically and secured mechanically after the adapter has been correctly hooked onto the electric power supply busbars.

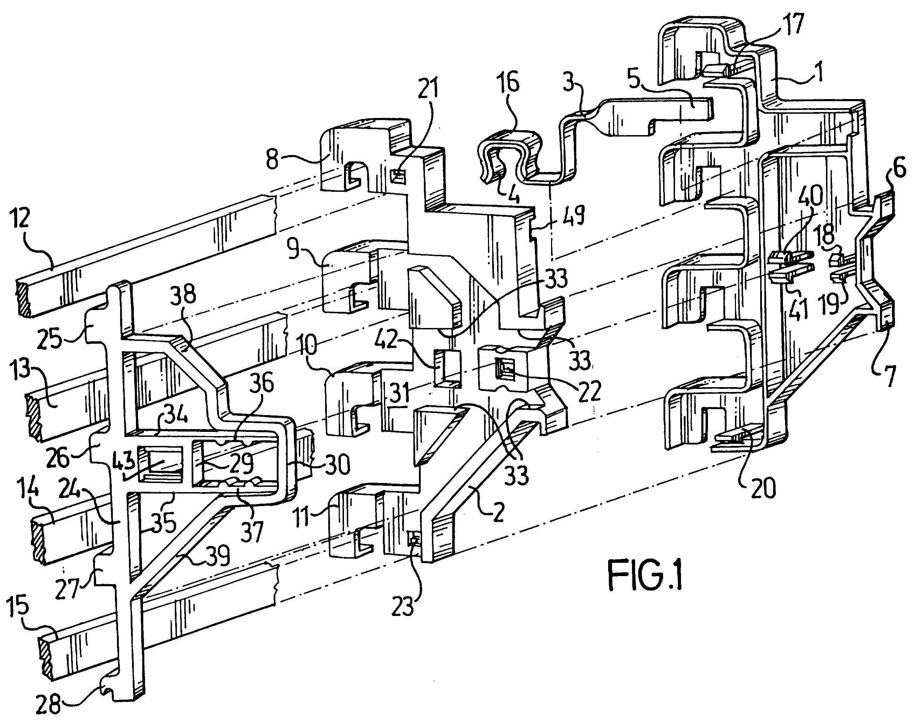

With reference to Figure 1, the adapter of this invention comprises two half-shells 1, 2 made of an insulating material and intended for coupling together into a slightly flattened box-type body having two relatively long sides and accommodating at least one metal connector 3 made up of a saddle piece 4 and a terminal 5 for electric connection to an apparatus, not shown.

The box-type body of the adapter is shaped (at both of its half-shells) to present frontally a double rail 6, 7 adapted for supporting and retaining the electric apparatus in interfit relationship.

Rearwardly, the box-type body is shaped (at both of its half-shells) to present a plurality of hollow hooks 8, 9, 10, 11 for hooking the adapter and resting it onto corresponding parallel busbars 12, 13, 14, 15, the hooks and bars being usually, but not necessarily, four in number.

The connector terminal 5 is led out of the adapter front, above the double rail 6, 7, through an appropriate relief 49 provided in the front wall of at least one of the two half-shells 1, 2.

The saddle piece 4 for hooking and contacting one of the busbars (busbar 13 in Figure 1) is received on one (hook 9 in Figure 1) of the hollow hooks of the adapter.

A straddling clip 16 mounted on the saddle piece 4 provides adequate contact pressure between the saddle piece and the bar, with the adapter installed on the busbars.

The two half-shells are held together in a stable manner by yielding tabs 17, 18, 19, 20 which are provided with end teeth formed integrally with the half-shell 1 and co-operating with corresponding engagement sockets 21, 22, 23 formed in the half-shell 2.

Alternatively, the two half-shells may be held together by screw fasteners, welding, or heat sealing, at selected locations thereon, if desired.

In accordance with the invention, the adapter is provided with a safety grip device 24 consisting of a comb-like arrangement of plural dent-like teeth 25, 26, 27, 28 lying in a row, and an elongate body 29 extending perpendicularly to the row of teeth and terminating in a front actuating lug or pushbutton of sort, 30.

The safety grip is preferably received in a suitably shaped recess 31 molded in the outward face of one of the two adapter half-shells (half-shell 2 in Figure 1).

The recess 31 is provided with two side walls 32, 33, parallel to each other and perpendicular to the array of hooks 8, 9, 10, 11 and the adapter front. The two walls co-operate with two corresponding sides 34, 35 of the body 29 to drive the safety grip into the recess 31 while leaving it free to slide axially along a perpendicular direction to the adapter front, between open and closed positions.

In Figure 1, these positions are positively defined by the interaction of two yielding arms 36, 37 connecting the body 29 to the front pushbutton 30 and having a double pair of elevations, with a guide tenon 38 provided on guide sides, co-operating with the yielding arms 36, 37, of a pair of recesses for receiving said elevations.

In the interest of a sturdier construction of the safety grip device 24, the comb-like arrangement thereof is radiused to the front actuating pushbutton 30 by two stiffening struts 38, 39, also received in the recess 31, as well as by the body 29 and the arms 36, 37.

The safety grip device 24 is attached to the adapter in a relatively permanent fashion by means of two opposite yielding tabs which are terminated in a tooth 41, 40, are formed on the half-shell 1 and extend through an opening 42 in the half-shell 2 to engage a sliding socket 43 in the body 29.

Alternative fastening arrangements, using screws passed through slotted holes, or by engaging the safety grip with the interior of one half-shell of the adapter rather than on an outward side thereof, are also possible.

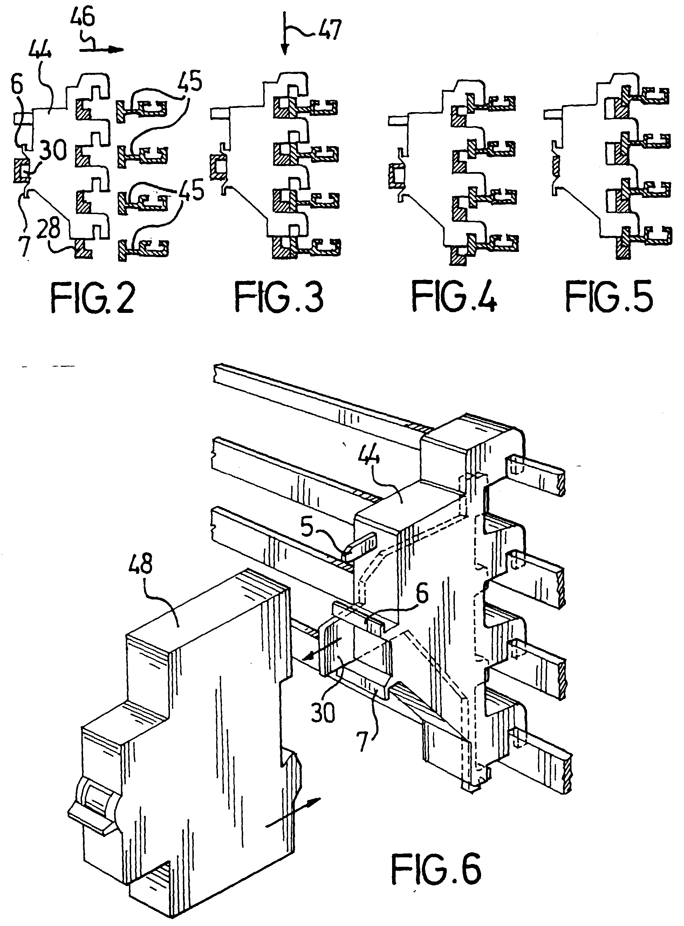

Figures 2, 3, 4, 5 are side views showing schematically the sequential steps of installing the adapter of Figure 1 onto electric power supply busbars.

In Figure 2, the adapter 44 is being brought close to a set of parallel busbars 45 in the direction of arrow 46 such that the bars will become inserted between the adapter hooks.

Shown in dashed lines for clarity is the visible portion of the underlying safety grip, in an open position.

In this position, the pushbutton 30 will jut frontally out of the plane through the double rail 6, 7, while the teeth 28 of the safety grip are in a retracted position from the adapter hooks.

By pushing the adapter against the busbars, as shown in Figure 3, far enough to bring the safety grip teeth against the bars, the adapter is correctly positioned for hooking and can be lowered along the direction of arrow 47 to cause the busbars to enter the sockets on the corresponding adapter hooks.

During this step, the safety grip will also act as an abutment to ensure proper relative positioning of the bar and the adapter and to make the hooking step to follow easier and safer, as ultimately illustrated by Figure 4.

By depressing the pushbutton 30 and accordingly pushing the teeth toward the busbars, this condition is changed to the condition shown in Figure 5, with the teeth of the safety grip now facing the adapter hooks and shutting the various busbars in their respective sockets on the hooks, in which condition the adapter removal and any displacements of the bars relative to one another would be inhibited. The bar spacing will be defined by the hook housings and the interaction of each of the safety grip teeth with a busbar, on the one side, and with an adjoining hook, on the other side, except the bottom tooth 28.

It will be appreciated that a buttress may also be provided for the bottom tooth in the safety grip by appropriate modification of the adapter design, to additionally afford advantageous protection for the bottom tooth and the comb-like arrangement end from external loads.

With the adapter in the condition shown in Figure 5, the pushbutton 30 will be in its depressed position inside the adapter body and provide an immediately perceivable indication of whether the adapter has been correctly hooked onto the busbars.

Additionally to this function, the pushbutton 30 is also effective to inhibit engagement of an electric apparatus, such as a switch, with the adapter unless the latter is correctly positioned and secured on the bars.

As shown in the perspective view of Figure 6, a modular electric apparatus 48 for rail installation (e.g. a single-throw switch) may only be pressed onto the electric connection terminal 5 and the mechanical securement double rail 6, 7 while the pushbutton 30 does not interfere with the body of the electric apparatus 48, because moved into its retracted position, for otherwise the engagement would be disallowed as shown in the Figure.

Of course, the adapter and electric appliance would preferably be the same size across, such that a plurality of adapters could be juxtaposed on the busbars and a plurality of modular electric appliances supported, also in juxtaposed relationship.

While the foregoing description covers but a preferred embodiment of this adapter with safety grip, many constructional changes may be made thereunto, as already pointed out therein, without departing from the scope of this invention as defined in the claims.

## Claims

1. An adapter for connecting interfit rail mounted electric apparatus (48) to electric power supply busbars (12,13,14,15), the adapter comprising a box-type body (1,2) having rails (6,7) for mounting a said electric apparatus (48) on a front thereof, a plurality of hooks (8,9,10,11) on the rear for engagement with busbars (12, 13,14,15), and being characterized in that it is provided with a safety grip device (24) carried slidably by said body (1,2) to move in a direction perpendicular to said front between an open position and a closed position and having a plurality of teeth (25,26,27,28) in a row which, when in the closed position of said device (24), extend into the spaces between adjoining hooks (8,9,10,11) on said body (1,2) to act as spacers and closures for said hooks (8,9,10,11), said device (24) being provided with an operation and safety lug (30) which , with said device in the open position, interferes with interfit rail mounting means for said elecric apparatus (48), thereby inhibiting their engagement with said rails (6,7).

2. An adapter according to Claim 1, wherein said safety grip device (24) and said body (1,2) comprise snap-action retainer means (40,41,34,35) for retaining said safety grip device (24) to said body (1,2) in a semipermanent manner.

## Patentansprüche

1. Ein Adapter zum Verbinden von zusammenpassenden Schienen-befestigten elektrischen Vorrichtungen (48) mit Sammelschienen (12, 13, 14, 15) zur elektrischen Leistungsversorgung, wobei der Adapter einen kastenartigen Körper (1, 2) mit Schienen (6, 7) zum Befestigen einer elektrischen Vorrichtung (48) auf einer Vorderseite desselben und eine Mehrzahl von Haken (8, 9, 10, 11) auf der Rückseite zur Ineingriffnahme mit den Sammelschienen (12, 13, 14, 15) aufweist und dadurch gekennzeichnet ist, daß er mit einem Sicherheitsgriffgerät (24) versehen ist, das durch den Körper (1, 2) gleitfähig getragen wird, um sich in einer Richtung senkrecht zu der Vorderseite zwischen einer offenen und einer geschlossenen Position zu bewegen, und das eine Mehrzahl von Zähnen (25, 26, 27, 28) in einer Reihe aufweist, welche sich in der geschlossenen Position des Geräts (24) in den Räumen zwischen nebeneinander liegenden Haken (8, 9, 10, 11) auf dem Körper (1, 2) erstrecken, um als Beabstandungsvorrichtungen und Schließvorrichtungen für die Haken (8, 9, 10, 11) zu wirken, wobei das Gerät (24) mit einer Betriebs- und Sicherheits-Nase (30) versehen ist, welche, wenn sich das Gerät in der offenen Position befindet, die zusammenpassenden Schienenbefestigungseinrichtungen für die elektrischen Vorrichtungen (48) stört, wodurch deren Ineingriffnahme mit den Schienen (6, 7) verhindert wird.

2. Ein Adapter gemäß Anspruch 1, bei dem das Sicherheitsgriffgerät (24) und der Körper (1, 2) eine Schnappbefestigungs-Halteeinrichtung (40, 41, 34, 35) zum Halten des Sicherheitsgriffgeräts (24) an dem Körper (1, 2) auf eine halbpermanente Art und Weise aufweisen.

## Revendications

1. Adaptateur pour connecter un appareil électrique (48), monté par ajustement sur des rails, à des barres omnibus (12, 13, 14, 15) d'alimentation en énergie électique, adaptateur comportant un corps (1, 2) du type boîte ayant des rails (6, 7) pour le montage dudit appareil électrique (48) sur un côté avant de cet adaptateur, plusieurs crochets (8, 9, 10, 11) sur le côté arrière pour s'enclencher avec des barres omnibus (12, 13, 14, 15), et caractérisé en ce qu'il est pourvu d'un dispositif (24) à griffe de sécurité porté en pouvant coulisser par ledit corps (1, 2) afin de se déplacer dans une direction perpendiculaire audit côté avant entre une position ouverte et une position fermée, et ayant plusieurs dents (25, 26, 27, 28) en une rangée qui, dans la position fermée dudit dispositif (24), pénètrent dans les espaces situés entre des crochets adjacents (8, 9, 10, 11) sur ledit corps (1, 2) afin d'agir à la manière d'entretoises et de fermetures pour lesdits crochets (8, 9, 10, 11), ledit dispositif (24) étant pourvu d'une patte (30) de manoeuvre et de sécurité qui, lorsque ledit dispositif est dans la position ouverte, fait obstacle à des moyens de montage ajustés sur les rails pour ledit appareil électrique (48), empêchant ainsi leur enclenchement avec lesdits rails (6, 7).

2. Adaptateur selon la revendication 1, dans lequel ledit dispositif à griffe de sécurité (24) et ledit corps (1, 2) comprennent des moyens de retenue (40, 41, 34, 35) à encliquetage pour retenir ledit dispositif à griffe de sécurité (24) sur ledit corps (1, 2) d'une manière semi-permanente.
